# EUROPEAN PATENT SPECIFICATION

(11) **EP 4 625 162 B1**
(45) Date of publication and mention of the grant of the patent: **28.10.2026**
(21) Application number: 24167193.2
(22) Date of filing: 28.03.2024
(51) Int. Cl.: G06F 9/451, G06F 40/35, G06N 3/006

(54) **HUMAN-LIKE ADVANCED HUMAN MACHINE INTERFACE**
MENSCH-MASCHINE-SCHNITTSTELLE
INTERFACE HOMME-MACHINE AVANCÉE DE TYPE HUMAIN

(43) Date of publication of application: 01.10.2025
(73) Proprietor: Deutsche Telekom AG, 53113 Bonn (DE)
(72) Inventor: ARUNOV, Elmar, 10587 Berlin (DE); CID CASTRO, Wenceslao, 64342 Seeheim-Jugenheim (DE)
(74) Representative: RDL Patentanwälte PartG mbB

(56) References cited:
- US-A1- 2023 351 217
- ZHU JIARUI ET AL: "Free-form Conversation with Human and Symbolic Avatars in Mixed Reality", 2023 IEEE INTERNATIONAL SYMPOSIUM ON MIXED AND AUGMENTED REALITY (ISMAR), IEEE, 16 October 2023 (2023-10-16), pages 751 - 760, XP034480324, DOI: 10.1109/ISMAR59233.2023.00090

## Description

The invention relates to a human machine interface, HMI, comprising a frontend, a backend and a public application programming interface, API, connecting the frontend to the backend. The invention further relates to a computer program product.

Known HMIs have a static nature and particularly are context-unaware which results in a reduced efficiency of human-machine interactions. Furthermore, the interactions may be perceived by users to be neither natural nor intuitive. The reduced efficiency may adversely affect information retrieval, task execution and last not least user satisfaction.

US 2023/0351217 A1 discloses a system and a method for training an artificial intelligence (AI) character model, wherein the Al character model is trained by, upon receiving input data from a user, performing an action responding to the input data and, upon receiving a correction of a user, performing an action modified according to the correction.

The contribution "Free-form Conversation with Human and Symbolic Avatars in Mixed Reality" by Jiarui Zhu et al., published on October 16, 2023 by IEEE, pages 751-760, DOI: 10.1109/ISMAR59233.2023.0090, discloses a HMI comprising an avatar (section 3.1) and an LLM (GPT-3, Section 3).

It is, therefore, an object of the invention to provide a HMI allowing for a natural and intuitive interaction similar to a human conversation and providing a satisfying user experience. Another object of the invention is to provide a computer program product. The invention is set out in the appended set of claims.

A first aspect of the invention is a human machine interface, HMI, comprising a frontend, a backend and a public application programming interface, API, connecting the frontend to the backend. The frontend is configured for an intermediate interaction with a user of the HMI. The backend is configured for representing a machine the user interacts with via the HMI. The application programming interface defines a client server architecture with the frontend being the client and the backend being the server. The client server architecture generally comprises a plurality of requests to be sent by the client and a plurality of responses to be sent by the server. Exemplary APIs comprise a simple object access protocol, SOAP, a remote procedure call, RPC, API, a websocket API using javascript object notation, JSON, objects and a representional state transfer, REST, API.

The frontend may be configured as web application, a mobile application or as a software development kit, SDK, embedded in a third party software.

According to the invention, the backend comprises an avatar backend for providing an avatar as a virtual human-like conversation partner and a large language model, LLM, backend providing a natural language ability. Both the avatar backend and the LLM backend are components of the backend of the HMI. The avatar backend is configured for creating and visually presenting, i.e., displaying a human-like, particularly photorealistic, conversation partner, i.e., an avatar to be immediately interacted with. The LLM backend is configured for providing the avatar with a colloquial language for writing and/or speaking. The human-like visual appearance of the avatar and the human-like conversational ability of the avatar allow the user of the HMI for a natural and intuitive interaction with a machine. The HMI provides the machine with a human touch, for short.

The LLM backend may comprise an LLM service adapter for connecting an LLM service. The LLM service adapter allows the HMI for integrating a plurality of different LLM services. Each LLM service comprises an artificial neural network trained for text analysis, i.e., understanding and text generation, i.e., speaking. LLMs can acquire a structural knowledge of human languages by training. The structural knowledge comprises a syntax, semantics and also an abiguity and/or an inaccuracy typical for a human language.

The LLM backend may further comprise an LLM conversation API connecting the LLM backend to the avatar backend. The LLM conversation API is a private API not accessible via the frontend. The LLM conversation API is configured to be connected to by the avatar backend and, hence, provides an avatar created by the avatar backend with the ability to participate in a conversation based on a colloquial language.

The LLM backend advantageously comprises an LLM fine tuning pipeline for adapting the LLM backend to each connected LLM service, an LLM model repository for storing specific LLM model collections and/or an LLM dialog management service for supporting an LLM service lacking a dialog management ability. The fine tuning pipeline allows for adapting the LLM service to a task specific LLM model. Each task specific LLM model forms part of a specific LLM model collection which is stored in the LLM model repository. Each specific LLM model collection is related to a particular use case covered by the HMI. The LLM dialog management service provides a conversation control for each LLM service not having a conversation control of its own.

In an embodiment, the HMI comprises a scanning device connected to an avatar scanning pipeline of the avatar backend via the public API, the avatar scanning pipeline connected to an avatar repository service of the avatar backend, the avatar repository service comprising specific avatar collections. The scanning device is configured to scan a face of a person and provide the avatar scanning pipeline with digital data representing the face of the person. The avatar scanning pipeline creates a digital three-dimensional model of the face based on a three-dimensional mesh. The avatar scanning pipeline may provide the digital three-dimensional model in different file formats. Each digital three-dimensional model forms part of a specific avatar collection stored by the avatar repository service. Each specific avatar collection is related to a particular use case covered by the HMI.

Still according to the invention, the avatar backend comprises an avatar session pool connected to the frontend via a direct connection, the avatar session pool comprising an avatar session server. The avatar session server represents an instance of an avatar. Each such instance forms part of the avatar session pool. The direct connection allows a user interacting with the HMI for a real-time interaction with the avatar, i.e., a conversation without a noticable or disturbing latency.

According to the invention, the avatar backend comprises an avatar session sync for creating and controlling each provided avatar, the avatar session sync connected to the client frontend via the public API. Creating the provided avatar comprises creating an avatar session server in the avatar session pool. The avatar session sync is a middleware and may be further configured for receiving an avatar session context and sending requests to business logic services, i.e., act as a bridge between an avatar session server and a frontend adapter (see below).

Still according to the invention, the backend comprises a functional backend and an integration gateway connected to a business adapter of the functional backend and allowing an external system for connecting to the HMI. The business adapter allows the HMI for integrating a plurality of different external services. Each integrated external service is related to a specific use case and may be controlled by a user interacting with the HMI.

The functional backend may comprise an authentication service connected to the client frontend via the public API. The authentication service authenticates, i.e., verifies an identity of each user interacting with the frontend and provides each authenticated user with the respective authorization. More generally, the authentication service may be configured as an identity broker to cooperate with external authentication and authorization systems related to a specific use case.

According to the invention, the functional backend further comprises an avatar session context providing a specific session context for each provided avatar. The avatar session context is a service and stores and provides data both for controlling business logic services (see below) and for supporting a conversation of the avatar with a user interacting with the frontend. The data may be provided by the business logic services and the avatar session server. In other words, the context data may be created by interacting with the HMI.

Still according to the invention, the functional backend comprises a business logic service providing a business service orchestration group. The business logic service may provide a plurality of different business service orchestration groups. Each business service orchestration group is related to a specific use case and may comprise logical resources and/or APIs related to business services connected to the integration gateway. The business logic service is visible and/or accessible to the frontend via the frontend adapter.

The functional backend may comprise backoffice services. The backoffice services may comprise management services and/or administration services for handling use cases, users, analytics, configurations, role assignments and the like.

In an embodiment, the functional backend comprises a frontend adapter connected to the frontend via the public API. The frontend adapter is a middleware configured for orchestrating a communication between the frontend and the backend. The frontend adapter essentially releases the frontend from being involved in a business logic. Additionally, the frontend adapter is configured as a bridge between the avatar session sync and the avatar session context.

The frontend is favorably configured for providing an admin access, the admin access allowing for setting up and configuring the HMI. Setting up and configuring comprises creating and customizing specific use cases. The admin access is, hence, provided for administrators having an adequate authorization.

The frontend is advantageously further configured for providing a user access, the user access allowing for interacting with the HMI. Interacting comprises having a conversation with an avatar. The user access is, hence, provided for end users of a specific use case.

Another aspect of the invention is a computer program product, comprising a digital storage medium storing a program code. The digital storage medium comprises a compact disc, CD, a digital versatile disc, DVD, a universal serial bus, USB, stick, a hard drive, HD, a random access memory, RAM, a cloud storage and the like.

According to the invention, the program code causes a computing device to provide a backend according to an embodiment of the invention when being executed by a processor of the computing device. The computer program product allows for setting up a HMI allowing for a natural, intuitive and efficient interaction and providing a satisfying user experience.

The HMI defines a plurality of different control flows. The different control flows comprise an avatar session control flow for controlling a provided avatar and a conversation control flow for controlling a conversation between a user and the provided avatar. The different control flows may further comprise an authentication control flow for authenticating a user operating the frontend, particularly distinguishing administrative users and end users, an application control flow for allowing an external service connected to the HMI to be controlled by the HMI and an avatar scanning control flow for setting up an avatar to be provided.

It is an essential advantage of the inventive HMI that the HMI allows for a natural and intuitive interaction similar to a human conversation resulting in both a high efficiency and a satisfying user experience. The satisfying user experience is due to a human-like conversation partner created by the HMI, the human-like conversation partner mastering a colloquial language in written and/or spoken form and preferably using a conversational context.

The invention is described in detail by means of an exemplary embodiment and with reference to the accompanying drawings. Like components are indicated by like reference numerals throughout the drawings. Therein:

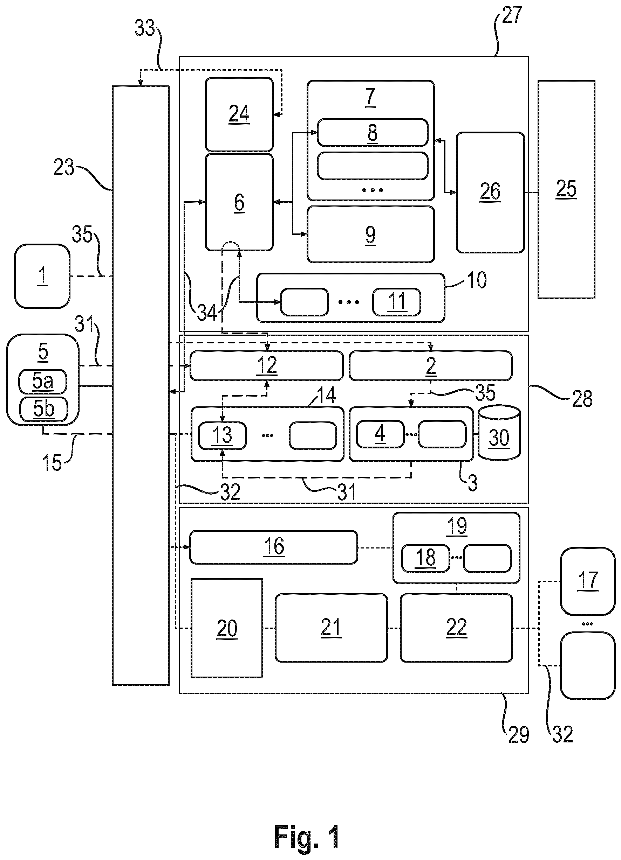

- Fig. 1: schematically shows a functional diagram of a human machine interface according to an embodiment of the invention.

Fig. 1 schematically shows a functional diagram of a human machine interface according to an embodiment of the invention. The human machine interface, HMI, is a system comprising a plurality of components described below and configured as a distributed application having a client server structure.

The human machine interface, HMI, comprises a frontend 5. The frontend 5 may be configured for providing an admin access 5a. The admin access 5a allows an administrative user for setting up and configuring the HMI. The frontend 5 may further be configured for providing a user access 5b. The user access 5b allows a user for interacting with the HMI.

The human machine interface comprises a backend and a public application programming interface, API, 23. The public API 23 connects the frontend 5 to the backend.

The HMI may be implemented by means of a computer program product. The computer program product comprises a digital storage medium storing a program code. The program code causes a computing device to provide the backend 5 when being executed by a processor of the computing device.

The backend comprises an avatar backend 28 for an avatar providing a virtual human-like conversation partner. The HMI favorably comprises a scanning device 1 connected to an avatar scanning pipeline 2 of the avatar backend 28 via the public API 23. The avatar scanning pipeline 2 is connected to an avatar repository service 3 of the avatar backend 28. The avatar repository service 3 comprises specific avatar collections 4 and accesses a storage 30 of the avatar backend 28.

The avatar backend 28 comprises an avatar session pool 14 comprising an avatar session server 13, particularly a plurality of avatar session servers 13. The avatar session pool 14 is connected to the frontend 5 via a direct connection 15. The avatar backend 28 comprises an avatar session sync 12 for creating and controlling each provided avatar, the avatar session sync 12 connected to the client frontend 5 via the public API 23.

The backend comprises a large language model, LLM, backend 29 providing a natural language ability. The LLM backend 29 may comprise an LLM service adapter 22 for connecting an LLM service 17, particularly a plurality of different LLM services 17. The LLM backend 29 may further comprise an LLM conversation API 20 connecting the LLM backend 29 to the avatar backend 28.

The LLM backend 29 preferably comprises an LLM fine tuning pipeline 16 for adapting the LLM backend 29 to each connected LLM service 17, an LLM model repository 19 for storing specific LLM model collections 18 and/or an LLM dialog management service 21 for supporting an LLM service 17 lacking a dialog management ability.

The backend comprises a functional backend 27 and an integration gateway 25. The integration gateway 25 is connected to a business adapter 26 of the functional backend 27 and allows an external system for connecting to the HMI.

The functional backend 27 may comprise an authentication service 24 connected to the client frontend 5 via the public API 23. The functional backend 27 comprises an avatar session context 10. The avatar session context 10 provides a specific session context 11 for each provided avatar.

The functional backend 27 further comprises a business logic service 7 providing business service orchestration groups 8, backoffice services 9 and/or a frontend adapter 6 connected to the frontend 5 via the public API 23.

The HMI defines a plurality of different control flows. The different control flows comprise an avatar session control flow 31 for controlling a provided avatar and a conversation control flow 32 for controlling a conversation between a user and the provided avatar. The different control flows may further comprise an authentication control flow 33 for authenticating a user operating the frontend 5, particularly distinguishing adminstrative users and end users, an application control flow 34 for allowing an external service connected to the HMI to be controlled by the HMI and an avatar scanning control flow 35 for setting up an avatar to be provided.

### Reference Numerals

- 1: scanning device
- 2: scanning pipeline
- 3: avatar repository service
- 4: avatar collection
- 5: frontend
- 5a: admin access
- 5b: user access
- 6: frontend adapter
- 7: business logic services
- 8: business service orchestration group
- 9: backoffice services
- 10: avatar session context
- 11: session context
- 12: avatar session sync
- 13: avatar session server
- 14: avatar session pool
- 15: direct connection
- 16: LLM fine tuning pipeline
- 17: LLM service
- 18: LLM model collection
- 19: LLM model repository
- 20: LLM conversation API
- 21: LLM dialog management service
- 22: LLM services adapter
- 23: public API
- 24: authentication service
- 25: integration gateway
- 26: business adapter
- 27: functional backend
- 28: avatar backend
- 29: LLM backend
- 30: storage
- 31: avatar session control flow
- 32: conversation control flow
- 33: authentication control flow
- 34: application control flow
- 35: avatar scanning control flow

## Claims

1. A human machine interface, HMI, comprising a frontend (5), a backend and a public application programming interface, API, (23) connecting the frontend (5) to the backend wherein the backend comprises an avatar backend (28) for providing an avatar as a virtual human-like conversation partner, the avatar backend (28) comprising an avatar session pool (14) connected to the frontend (5) via a direct connection (15), the avatar session pool (14) comprising an avatar session server (13) representing an instance of an avatar with each such instance forming part of the avatar session pool (14) and the direct connection allowing a user interacting with the HMI for a real-time interaction with the avatar, and a large language model, LLM, backend (29) providing a natural language ability, wherein the avatar backend (28) comprises an avatar session sync (12) for creating and controlling each provided avatar, the avatar session sync (12) connected to the client frontend (5) via the public API (23) and creating each provided avatar comprising creating an avatar session server (13) in the avatar session pool (14), the backend comprises a functional backend (27) and an integration gateway (25) connected to a business adapter (26) of the functional backend (27) and allowing an external system for connecting to the HMI, the functional backend (27) comprises an avatar session context (10) providing a specific session context (11) for each provided avatar, and the functional backend (27) comprises a business logic service (7) providing business service orchestration groups (8).

2. The HMI according to claim 1, wherein the LLM backend (29) comprises an LLM service adapter (22) for connecting an LLM service (17).

3. **The HMI** according to claim 1 or 2, wherein the **LLM** backend (29) comprises an **LLM** conversation **API** (20) connecting the **LLM** backend (29) to the avatar backend (28).

4. The **HMI** according to one of claims 1 to 3, wherein the **LLM** backend (29) comprises an **LLM** fine tuning pipeline (16) for adapting the **LLM** backend (29) to each connected **LLM** service (17), an **LLM** model repository (19) for storing specific **LLM** model collections (18) and/or an **LLM** dialog management service (21) for supporting an **LLM** service (17) lacking a dialog management ability.

5. The **HMI** according to one of claims 1 to 4, comprising a scanning device (1) connected to an avatar scanning pipeline (2) of the avatar backend (28) via the public **API** (23), the avatar scanning pipeline (2) connected to an avatar repository service (3) of the avatar backend (28), the avatar repository service (3) comprising specific avatar collections (4).

6. The **HMI** according to one of claims 1 to 5, wherein the functional backend (27) comprises an authentication service (24) connected to the client frontend (5) via the public **API** (23).

7. The **HMI** according to one of claims 1 to 6, wherein the functional backend (27) comprises backoffice services (9).

8. The **HMI** according to one of claims 1 to 7, wherein the functional backend (27) comprises a frontend adapter (6) connected to the frontend (5) via the public **API** (23).

9. The **HMI** according to one of claims 1 to 8, wherein the frontend (5) is configured for providing an admin access (5a) and for providing a user access (5b), the admin access (5a) allowing for setting up and configuring the HMI and the user access (5b) allowing for interacting with the HMI.

10. A computer program product, comprising a digital storage medium storing a program code, the program code causing a computing device to provide a backend of a HMI according to one of claims 1 to 9 when being executed by a processor of the computing device.

## Patentansprüche

1. Mensch-Maschine-Schni'stelle, MMS, umfassend ein Frontend (5), ein Backend und eine öffentliche Anwendungsprogrammierschni'stelle, API, (23), die das Frontend mit dem Backend verbindet, wobei das Backend ein Avatar-Backend (28) umfasst, um einen Avatar als virtuellen menschenähnlichen Gesprächspartner bereitzustellen, wobei das Avatar-Backend (28) einen Avatar-Sitzungspool (14) umfasst, der über eine direkte Verbindung (15) mit dem Frontend (5) verbunden ist, wobei der Avatar-Sitzungspool (14) einen Avatar-Sitzungsserver (13) umfasst, der eine Instanz eines Avatars darstellt, wobei jede dieser Instanzen Teil des Avatar-Sitzungspools (14) ist und die direkte Verbindung einem Nutzer, der mit der MMS interagiert, eine Interak;on in Echtzeit mit dem Avatar ermöglicht, und ein Large Language Model (LLM)-Backend (29), das eine natürliche Sprachfähigkeit bereitstellt, wobei das Avatar-Backend (28) eine Avatar-Sitzungssynchronisa;on (12) zur Erstellung und Steuerung jedes der bereitgestellten Avatare umfasst, wobei die Avatar-Sitzungssynchronisa;on (12) über die öffentliche API (23) mit dem Client-Frontend (5) verbunden ist und wobei die Erstellung jedes bereitgestellten Avatars die Erstellung eines Avatar-Sitzungsservers (13) im Avatar-Sitzungspool (14) umfasst, wobei das Backend ein funk;onales Backend (27) und einen Integra;ons-Gateway (25) umfasst, der mit einem Business-Adapter (26) des funk;onalen Backends (27) verbunden ist und die Verbindung eines externen Systems mit der MMS ermöglicht, wobei das funk;onale Backend (27) einen Avatar-Sitzungskontext (10) umfasst, der für jeden bereitgestellten Avatar einen spezifischen Sitzungskontext (11) bereitstellt, und wobei das funk;onale Backend (27) einen Business Logik Service (7) umfasst, der Business Service Orchestrierungsgruppen (8) bereitstellt.

2. MMS nach Anspruch 1, wobei das LLM-Backend (29) einen LLM-Serviceadapter (22) zum Verbinden eines LLM-Services (17) umfasst.

3. MMS nach Anspruch 1 oder 2, wobei das LLM-Backend (29) eine LLM-Konversa;ons-API (20) umfasst, die das LLM-Backend (29) mit dem Avatar-Backend (28) verbindet.

4. MMS nach einem der Ansprüche 1 bis 3, wobei das LLM-Backend (29) eine LLM-Pipeline zur Feinabs;mmung (16) für die Anpassung des LLM-Backends (29) an jeden verbundenen LLM-Service (17), ein LLM-Modell-Archiv (19) zur Speicherung spezifischer LLM-Modellkollek;onen (18) und/oder einen LLM-Dialogmanagementservice (21) zur Unterstützung eines LLM-Services (17), der keine DialogmanagemenDähigkeiten besitzt, umfasst.

5. MMS nach einem der Ansprüche 1 bis 4, umfassend einen Scanner (1), der über die öffentliche API (23) mit einer Avatar-Scan-Pipeline (2) des Avatar-Backends (28) verbunden ist, wobei die Avatar-Scan-Pipeline (2) mit einem Avatar- Archiv-Service (3) des Avatar-Backends (28) verbunden ist, wobei der Avatar- Archiv-Service (3) spezifische Avatar-Kollek;onen (4) umfasst.

6. MMS nach einem der Ansprüche 1 bis 5, wobei das funk;onale Backend (27) einen Authentifizierungsservice (24) umfasst, der über die öffentliche API (23) mit dem Client-Frontend (5) verbunden ist.

7. MMS nach einem der Ansprüche 1 bis 6, wobei das funk;onale Backend (27) Backoffice-Services (9) umfasst.

8. MMS nach einem der Ansprüche 1 bis 7, wobei das funk;onale Backend (27) einen Frontend-Adapter (6) umfasst, der über die öffentliche API (23) mit dem Frontend (5) verbunden ist.

9. MMS nach einem der Ansprüche 1 bis 8, wobei das Frontend (5) ausgebildet ist, einen Admin-Zugang (5a) und einen Nutzerzugang (5b) bereitzustellen, wobei der Admin-Zugang (5a) die Einrichtung und Konfiguration der MMS und der Nutzerzugang (5b) die Interak;on mit der MMS ermöglicht.

10. Computerprogrammprodukt, umfassend ein digitales Speichermedium, auf dem ein Programmcode gespeichert ist, wobei der Programmcode eine Rechenvorrichtung veranlasst, ein Backend einer MMS nach einem der Ansprüche 1 bis 9 bereitzustellen, wenn dieser durch einen Prozessor der Rechenvorrichtung ausgeführt wird.

## Revendications

1. Interface homme-machine (IHM) comprenant une interface frontale (5), une interface dorsale et une interface de programma/on d'applica/ons (API) publique (23) reliant l'interface frontale (5) à l'interface dorsale, l'interface dorsale comprenant une interface dorsale d'avatar (28) des/née à fournir un avatar servant d'interlocuteur virtuel à l'apparence humaine, l'interface dorsale d'avatar (28) comprenant un pool de sessions d'avatar (14) relié à l'interface frontale (5) via une connexion directe (15), le pool de sessions d'avatar (14) comprenant un serveur de sessions d'avatar (13) représentant une instance d'un avatar, chaque instance de ce type faisant par/e du pool de sessions d'avatar (14), et la connexion directe perme8ant à un u/lisateur interagissant avec l'IHM d'interagir en temps réel avec l'avatar, et une interface dorsale à grand modèle de langage (LLM) (29) offrant une capacité de langage naturel, l'interface dorsale d'avatar (28) comprenant un système de synchronisa/on de sessions d'avatar (12) des/né à créer et à commander chaque avatar fourni, ce système de synchronisa/on de sessions d'avatar (12) étant connecté à l'interface frontale (5) client via l'API publique (23) et la créa/on de chaque avatar fourni comprenant la créa/on d'un serveur de sessions d'avatar (13) dans le pool de sessions d'avatar (14), l'interface dorsale comprenant une interface dorsale fonc/onnelle (27) et une passerelle d'intégra/on (25) connectée à un adaptateur mé/er (26) de l'interface dorsale fonc/onnelle (27) et perme8ant à un système externe de se connecter à l'IHM, l'interface dorsale fonc/onnelle (27) comprenant un contexte de session d'avatar (10) fournissant un contexte de session spécifique (11) pour chaque avatar fourni, et l'interface dorsale fonc/onnelle (27) comprenant un service de logique mé/er (7) fournissant des groupes d'orchestra/on de services mé/er (8).

2. IHM selon la revendica/on 1, l'interface dorsale à LLM (29) comprenant un adaptateur de service LLM (22) des/né à se connecter à un service LLM (17).

3. IHM selon la revendica/on 1 ou 2, l'interface dorsale à LLM (29) comprenant une API de conversa/on LLM (20) reliant l'interface dorsale à LLM (29) à l'interface dorsale d'avatar (28).

4. IHM selon l'une des revendica/ons 1 à 3, l'interface dorsale à LLM (29) comprenant un pipeline de réglage fin de LLM (16) des/né à adapter l'interface dorsale à LLM (29) à chaque service LLM (17) connecté, un archive de modèles LLM (19) des/né à stocker des collec/ons spécifiques de modèles LLM (18) et/ou un service de ges/on des dialogues LLM (21) des/né à prendre en charge un service LLM (17) ne disposant pas de capacité de ges/on des dialogues.

5. IHM selon l'une des revendica/ons 1 à 4, comprenant un disposi/f de numérisa/on (1) connecté à un pipeline de numérisa/on d'avatar (2) de l'interface dorsale d'avatar (28) via l'API publique (23), le pipeline de numérisa/on d'avatar (2) connecté à un service d'archivage d'avatar (3) de l'interface dorsale d'avatar (28), le service d'archivage d'avatar (3) comprenant des collec/ons spécifiques d'avatar (4).

6. IHM selon l'une des revendica/ons 1 à 5, l'interface dorsale fonc/onnelle (27) comprenant un service d'authentification (24) connecté à l'interface frontale (5) client via l'API publique (23).

7. IHM selon l'une des revendica/ons 1 à 6, l'interface dorsale fonc/onnelle (27) comprenant des services de back-office (9).

8. IHM selon l'une des revendica/ons 1 à 7, l'interface dorsale fonc/onnelle (27) comprenant un adaptateur pour interface frontale (6) connecté à l'interface frontale (5) via l'API publique (23).

9. IHM selon l'une des revendica/ons 1 à 8, l'interface frontale (5) étant configurée pour fournir un accès administrateur (5a) et pour fournir un accès u/lisateur (5b), l'accès administrateur (5a) perme8ant la mise en place et la configuration de l'IHM et l'accès u/lisateur (5b) perme8ant d'interagir avec l'IHM.

10. Produit logiciel, comprenant un support de stockage numérique sur lequel est stocké un code de programme, ledit code de programme amenant un disposi/f informa/que à fournir une interface dorsale d'une IHM selon l'une des revendica/ons 1 à 9 lorsqu'il est exécuté par un processeur dudit disposi/f informa/que.
